# EUROPEAN PATENT APPLICATION

(11) **EP 2 503 129 A1**
(43) Date of publication of application: **26.09.2012**
(21) Application number: 12154008.2
(22) Date of filing: 06.02.2012
(51) Int. Cl.: F02B 75/32, F01B 9/04

(54) **Gear Engine**

(30) Priority: 07.02.2011 IQ 612011
(71) Applicant: Nasser Saeed B ALGhamdi, 114511 Al-Riyadh (SA); Almansor, Falih Hasan Ahmed, Mosul (IQ); Kasrow, Naktel Nather Mahmud, Mosul (IQ)
(72) Inventor: Almansor, Falih Hasan Ahmed, Mosul (IQ); Kasrow, Naktel Nather Mahmud, Mosul (IQ)
(74) Representative: Viering, Jentschura & Partner

(57) **Abstract**

The invention relates to a drive chain comprising: an internal combustion engine (10) having one or more first cylinders (12), wherein each of said one or more first cylinders (12) receives a respective first piston (14) slidably arranged within the respective first cylinder (12), with said first cylinder (12) and said first piston (14) defining a combustion chamber, and with said first piston (14) being swivelably connected to a first connecting rod (16), an output shaft (18); a pair of first rotatable drive gearwheels (20) arranged in parallel to each other; a pair of first rotatable driven gearwheels (22) arranged in parallel to each other and arranged on said output shaft (18), with a first one of said first driven gearwheels (22) being drivable by a first one of the first drive gearwheels (20) and with the other one of the said first driven gearwheels (22) being drivable by the other one of said first drive gearwheels (20); wherein said first connecting rod (16) is rotatably connected to both of the drive gearwheels (20) of the pair of first drive gearwheels (20) at a respective eccentric position of the respective first drive gearwheels (20) so as to drive these first drive gearwheels (20), with said eccentric position being eccentric with regard to the rotation axis (24) of the first drive gearwheels (20).

## Description

The invention refers to a drive chain having a combustion engine, and in particular to drive chain having a combustion engine for automobiles.

Drive chains are, for example, known from the technical field of automobiles. For example, a drive chain known from the technical field of automobiles comprises a combustion engine having multiple cylinders, wherein in each of said cylinders a piston having a piston rod is slidably arranged. Each of the piston rods is rotatably connected to a connecting rod, and these connecting rods pivotably engage a crankshaft.

Air as well as fuel can be inserted into the chambers of the piston, and an explosion of the fuel/air mixture can be caused so as to axially move the piston, whereby the piston rotationally drives the crankshaft by means of the piston rod.

Furthermore, such drive chains can be provided with a gear box enabling to change the gear ratio between two shafts. Such a gear box may have a plurality of gearwheels arranged on a first shaft and a plurality of gearwheels arranged on a second shaft, wherein each of the gearwheels of the first shaft is allocated to a respective gearwheel of the second shaft so that there are pairs of gearwheels that engage or may engage each other. At least one of the gearwheels of each pair of gearwheels is releasably connected to the respective shaft; the other one of the gearwheels of the same pair of gearwheels may be fixed to the other shaft.

Therefore, one pair of the gearwheels can be switched to a condition in which these gearwheels are in a drive connection and in which both of these gearwheels are connected torque proof to the first or second shaft, respectively, so that the first shaft can drive the second shaft via the respective pair of gearwheels. In this state, the remaining pairs of gearwheels can be switched to a condition in which the respective gearwheels are not in a drive connection and/or in which at least one of the respective gearwheels of the pair of gearwheels is not connected torque proof to the respective shaft, so that the second shaft cannot be driven by the first shaft via these remaining pairs of gearwheels.

By solving the drive connection between the respective gearwheels of the one pair of gearwheels and/or by solving the connection torque proof between at least one of these gearwheels and the respective shaft, the respective gear can be disengaged, and another gear can be engaged by switching another pair of the gearwheels in a condition in which the gearwheels of this other pair of the gearwheels are in a drive connection and in which both of these gearwheels are connected torque proof to the first or second shaft, respectively, so that the first shaft can drive the second shaft via the respective other pair of gearwheels.

In this manner, gears of the gear box can be changed again and again, so as to change the speed ratio between the first and the second shaft.

In conventional designs of the afore-mentioned design, the pistons or piston shafts are directly connected to the crank shaft via a connecting shaft, so that a reciprocating cycle, i.e. one forth and back motion of the pistons or piston stroke, respectively, inevitably causes exactly one 360° turn of the crank shaft.

An increase of the piston stroke length thus reduces the rotational speed of the crank shaft, at least if the piston speed is kept the same in these variations.

Running the crank shaft by using multiple phases requires very complicated crank shafts, whereby the production cost increases and the stability of the crank shaft is reduced.

In addition, the known design does not allow easy adaption to different requirements.

It is therefore an object of the present invention to provide a drive chain that can be flexibly adapted to different requirements with a great reliability.

According to the present invention a drive chain as claimed in claim 1 is provided. The dependent claims define some examples of such a drive chain.

According to a further aspect of the present invention, a drive chain comprises an internal combustion engine having one or more first cylinders. Each of said one or more first cylinders receives a respective first piston slidably arranged within the respective first cylinder. Said first cylinder and said first piston define a combustion chamber. Said first piston is swivelably connected to a first connecting rod. The drive chain further comprises an output shaft, a pair of first rotatable drive gearwheels arranged in parallel to each other, and a pair of first rotatable driven gearwheels arranged in parallel to each other and arranged on said output shaft. These driven gearwheels may be torque proof with regard to the output shaft, or they may be configured such that such a torque proof condition may be achieved and solved. A first one of said first driven gearwheels is drivable by a first one of the first drive gearwheels and the other one of the said first driven gearwheels is drivable by the other one of said first drive gearwheels. The respective gearwheels may be in a permanent engagement or may switchable between an engagement condition and a disengagement condition. Said first connecting rod is rotatably connected to both of the drive gearwheels of the pair of first drive gearwheels at a respective eccentric position of the respective first drive gearwheels so as to drive these first drive gearwheels , with said eccentric position being eccentric with regard to the rotation axis of the first drive gearwheels .It must be noted that the applicant reserves the right to claim said further aspect in an independent claim, and all examples presented in the present application may also be examples of said further aspect.

The piston may be provided with a piston rod, and the connecting shaft may be linked to said piston rod.

The driven gearwheels may be driven by direct engagement with the drive gearwheels, or via intermediate gearwheels or chains or the like.

The speed ratio between the first one of the first drive gearwheels and the first one of the first driven gearwheels is the same as the speed ratio between the other one of the first drive gearwheels and the other one of the first driven gearwheels. This may apply correspondingly to the other pairs of gearwheels mentioned in this application.

The internal combustion engine may comprise one or more second cylinders, wherein each of said one or more second cylinders receives a respective second piston slidably arranged within the respective second cylinder. The second cylinder and said second piston may define a combustion chamber, and said second piston may be swivelably connected to a second connecting rod. Said second connecting rod may be rotatably connected to both drive gearwheels of the pair of first drive gearwheels at a respective eccentric position of the respective first drive gearwheels so as to drive these first drive gearwheels. Said eccentric position is a position eccentric with regard to the rotation axis of the first drive gearwheels. According to a further embodiment of the invention a third cylinder receiving a respective third piston slidably arranged within the respective third cylinder may be provided, wherein said third cylinder and said third piston may define a combustion chamber, and wherein said third piston may be swivelably connected to a third connecting rod, and wherein said third connecting rod may be rotatably connected to both drive gearwheels of the pair of first drive gearwheels at a respective eccentric position of the respective first drive gearwheels so as to drive these first drive gearwheels. Said eccentric position is a position eccentric with regard to the rotation axis of the first drive gearwheels. In both of these embodiments, i.e. in the embodiments in which two or three connecting rods drive a pair of first drive wheels, these connecting rods may be linked to said drive wheels by means of one connecting shaft or bolt, or by coinciding connecting shafts or bolts.

The internal combustion engine may further comprise one or more third cylinders, wherein each of said one or more third cylinders receives a respective third piston slidably arranged within the respective third cylinder, with said third cylinder and said third piston defining a combustion chamber, and with said third piston being swivelably connected to a third connecting rod. In addition, the internal combustion engine may comprise one or more fourth cylinders, wherein each of said one or more fourth cylinders receives a respective fourth piston slidably arranged within the respective fourth cylinder, with said fourth cylinder and said fourth piston defining a combustion chamber, and with said fourth piston being swivelably connected to a fourth connecting rod. The drive chain may further comprises a pair of second rotatable drive gearwheels arranged in parallel to each other, wherein a first one of said first driven gearwheels is drivable by a first one of said second drive gearwheels and the other one of the said first driven gearwheels is drivable by the other one of said second drive gearwheels, and wherein said both of said third and fourth connecting rods are rotatably connected to both of the drive gearwheels of the pair of second drive gearwheels at a respective eccentric position of the respective second drive gearwheels so as to drive these second drive gearwheels, with said eccentric position being eccentric with regard to the rotation axis of the second drive gearwheels.

The internal combustion engine may comprise one or more second cylinders, wherein each of said one or more second cylinders receives respective a second piston slidably arranged within the respective second cylinder, with said second cylinder and said second piston defining a combustion chamber, and with said second piston being swivelably connected to a second connecting rod, wherein a pair of second rotatable drive gearwheels arranged in parallel to each other; wherein a first one of said first driven gearwheels is drivable by a first one of said second drive gearwheels and the other one of the said first driven gearwheels is drivable by the other one of said second drive gearwheels; wherein said second connecting rod is rotatably connected to both of the drive gearwheels of the pair of second drive gearwheels at a respective eccentric position of the respective second drive gearwheels so as to drive these second drive gearwheels, with said eccentric position being eccentric with regard to the rotation axis of the second drive gearwheels.

The said internal combustion engine may comprise one or more third cylinders, wherein each of said one or more third cylinders receives a respective third piston slidably arranged within the respective third cylinder, with said third cylinder and said third piston defining a combustion chamber, and with said third piston being swivelably connected to a third connecting rod, wherein a pair of third rotatable drive gearwheels is arranged in parallel to each other; wherein a first one of said first driven gearwheels is drivable by a first one of said third drive gearwheels and the other one of the said first driven gearwheels is drivable by the other one of said third drive gearwheels; wherein said third connecting rod is rotatably connected to both of the drive gearwheels of the pair of third drive gearwheels at a respective eccentric position of the respective third drive gearwheels so as to drive these third drive gearwheels, with said eccentric position being eccentric with regard to the rotation axis of the third drive gearwheels.

The drive gearwheels of the pair of first rotatable drive gearwheels may be are supported by two separate first drive gearwheel support shafts; and/or the drive gearwheels of the pair of second rotatable drive gearwheels may be supported by two separate second drive gearwheel support shafts; and/or the drive gearwheels of the pair of third rotatable drive gearwheels may be supported by two separate third drive gearwheel support shafts.

At least one housing for supporting the first drive gearwheel support shafts and/or for supporting the second drive gearwheel support shafts and/or for supporting the third drive gearwheel support shafts and/or for supporting the first cylinder and/or for supporting the second cylinder and/or for supporting the third cylinder and/or for supporting the fourth cylinder and/or for supporting the output shaft may be is provided.

The first drive gearwheels and/or second drive gearwheels and/or third drive gearwheels may be rotatably supported by means of ball bearings.

The first connecting rod may be rotatably connected to both of the drive gearwheels of the pair of first drive gearwheels by means of one or at least two ball bearings; and/or the second connecting rod may be rotatably connected to both of the drive gearwheels of the pair of first drive gearwheels by means of one or at least two ball bearings; and/or the second connecting rod may be rotatably connected to both of the drive gearwheels of the pair of second drive gearwheels by means of one or at least two ball bearings; and/or the third connecting rod may be rotatably connected to both of the drive gearwheels of the pair of third drive gearwheels by means of one or at least two ball bearings; and/or both of said third and fourth connecting rods may be rotatably connected to both of the drive gearwheels of the pair of second drive gearwheels by means of one or at least two ball bearings.

For the pair of first rotatable drive gearwheels and/or for the pair of second rotatable drive gearwheels and/or for the pair of third rotatable drive gearwheels and/or for the pair of fourth rotatable drive gearwheels at least one first and/or second and/or third and/or fourth further pair of rotatable drive gearwheels, respectively, may be provided, with the rotation axes of said respective at least one further pair of rotatable drive gearwheels coinciding with the respective axes of rotation of said respective pair of rotatable drive gearwheels, wherein the drive gearwheels of said respective further pair of rotatable drive gearwheels and the drive gearwheels of said respective pair of rotatable gearwheels may be in parallel to each other; wherein said respective further pair of rotatable drive gearwheels may be drivable by the same respective connecting rod by which the respective pair of gearwheels may be drivable; wherein at least one further pair of driven gearwheels drivable by a respective pair of the respective further pair of rotatable drive gearwheels may be provided on the output shaft so as to provide another gear ratio; and wherein a first switch device for engaging and disengaging drive and driven gearwheels may be provided, so as to select a respective gear ratio.

The first cylinder with the first piston and the first connecting rod and/or second cylinder with said second piston and said second connecting rod, and/or third cylinder with said third piston and said third connecting rod, and/or the fourth cylinder with said fourth piston and said fourth connecting rod; and/or said pair of first drive gearwheels and/or said pair of second drive gearwheels, and/or said pair of third drive gearwheels, and/or said pair of fourth drive gearwheels; and/or said pair of first driven gearwheels; and/or said at least one further pair of rotatable driven gearwheels; and/or said two separate first drive gearwheel support shafts, and/or said two separate drive second gearwheel support shafts, and/or said two separate third drive gearwheel support shafts; and/or said at least one housing; and/or said at least one ball bearing may be defined as a first unit, wherein a plurality of first units may be provided in a row, and wherein said output shaft may be drivable by said first units.

Said definition of said first unit may include the respective structural interdependencies of the members belonging to said first unit.

The first units may be are configured to drive the output shaft in at least two phases.

One or at least two flywheels may be provided on the output shaft in a torque proof manner.

A second switch device for interrupting the force flow between one or more, but less than all, cylinders and the output shaft during the operation of the drive chain, and/or for switching off the driving force one or more, but less than all, pistons and the output shaft during the operation of the drive chain may be provided.

The respective connecting rod provided in embodiments of the invention may extend in a space between the drive gearwheels of the respective pair of drive gearwheels. This may enable the use of a single connecting shaft for both of said drive wheels, for example.

The axes of rotation of the gearwheels of the respective same pair of gearwheels may coincide. The drive gearwheels of the respective same pair of drive gearwheels may be supported by separate drive gearwheel support shafts or bolts. Said drive gearwheel support shafts or bolts may be supported by a housing. Ball bearings may be provided between the respective drive gearwheel support shaft or bolt and the respective drive gearwheel, wherein the respective or drive gearwheel support shaft or bolt may be fixed to the housing, for example. Alternatively, a ball bearing may be provided between said drive gearwheel support shaft or bolt and said housing, wherein the respective drive gearwheel is fixed to said drive gearwheel support shaft or bolt. Said ball bearings, like, for example, roller bearings, may be used to reduce friction, and the use of ball bearings is simplified by the embodiments of the invention. By such ball bearings, friction can be reduced.

Cylinder rollers, cone rollers or spherical rollers may be used in said roller bearings, for example.

Sleeves having shoulders may be provided for supporting the respective drive gearwheel support shafts, and the shoulders may serve for connecting the sleeves to the housing by means of screws or the like.

Using pairs of drive gearwheels may ensure equal stress distribution.

Using an output shaft, which is not a crank shaft, may improof the stability of said shaft.

The internal combustion engine may be any internal combustion engine running on gasoline or any diesel type, for example.

The invention allows connecting an unlimited number of pistons. The output shaft may be designed such that its cross sections (along its length) coincide , so that the resistance against the strength of twisting caused by connecting a very large number of the pistons is very high. This may be of great advantage in electric generator applications, for example, where very high loads may occur.

The first and second cylinders, or the first, second and third cylinders, respectively, may be arranged in a plane perpendicular to the axis of rotation of the drive gearwheels. The longitudinal axes of said cylinders may be angled with regard to each other.

The drive chain according to the present invention or its exemplary embodiments, respectively, may be used in different kinds of technical fields, like, for example, automobile (for driving the wheels of the automobile), helicopters (for driving the rotor), heavy machines, generators, and the like.

An exemplary drive chain may have a plurality of combustion engines. Furthermore, different combustion engines integrated in an exemplary drive chain may run by means of different type of fuel.

It must be noted that more than one first, second, third, and/or fourth cylinders may be provided. In such a case, however, these multiple cylinders having the same number preferably are not arranged in the same plane extending perpendicular to the axis of rotation of the drive gearwheels, but are distanced from each other in the longitudinal direction of said axis of rotation. The expressions first, second, third, and/or fourth cylinders, therefore, are particularly used so as to identify different cylinders spaced apart from each other in a direction perpendicular to said axis of rotation or allocated in the same plane, with said same plane being perpendicular to said axis of rotation.

Features:
1- The companies can produce superior engines that have superior efficiency, and this will lead to enter the electricity production field in the wide range.
This engine will be the best choice to produce the power electricity comparing with other engine.
This engine has economy and less environmental pollution features than thermal energy.
2- The companies can produce a variety engines that have different specifications and speeds. This will fill different requirements of many fields such as ships, automobiles and rotorcraft.
3- Ease of manufacturing and maintenance, because of the absence of zigzag crankshaft.

It must be noted that the afore-mentioned examples, which are examples of the invention as claimed or the further aspect of the invention respectively, can also be combined with each other or with features of the following examples.

In the following detail description, some examples of the present invention will be described, wherein
- Fig. 1: shows a first exemplary embodiment of the present invention;
- Fig. 2: shows a second exemplary embodiment of the present invention;
- Fig. 3: shows a third exemplary embodiment of the present invention;
- Fig. 4: shows a fourth exemplary embodiment of the present invention;
- Fig. 5: shows a fifth exemplary embodiment of the present invention;
- Figs. 6: and 7 show a sixth exemplary embodiment of the present invention;
- Figs. 8: and 9 show a seventh exemplary embodiment of the present invention;
- Fig. 10: shows an eighth exemplary embodiment of the present invention; and
- Fig. 11 and 12: show a ninth exemplary embodiment of the present invention.

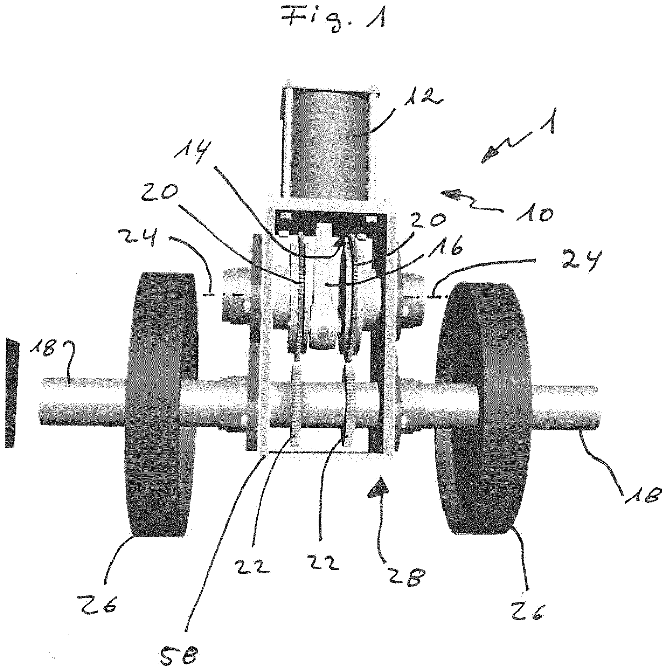

Fig. 1 shows a first exemplary embodiment of the present invention.

Drive chain 1 comprises an internal combustion engine 10 having one or more first cylinders 12 (Fig. 1 shows 1 cylinder 12). First cylinder 12 receives a first piston 14 (not shown) slidably arranged within the first cylinder 12. Said first cylinder 12 and said first piston 14 define a combustion chamber (not shown) within the first cylinder 12, wherein the volume of said combustion chamber depends on the axial position of said first piston 14 (same applies to second, third, and fourth pistons and cylinders mentioned below).

The first piston 14 is swivelably connected to a first connecting rod 16.

The first piston 14 may be provided with a piston rod, to which the first connecting rod 16 is swivelably connected, or the first piston 14 may be free of a piston rod, or any intermediate parts may be provided.

Drive chain 1 further comprises an output shaft 18, and a pair of first rotatable drive gearwheels 20 arranged in parallel to each other, and a pair of first rotatable driven gearwheels 22 arranged in parallel to each other and arranged on said output shaft 18, so that the output shaft 18 is, for example releasably or unreleasably, torque proof with the first driven gearwheels 22.

A first one of said first driven gearwheels 22 is drivable by a first one of the first drive gearwheels 14 and the other one of the said first driven gearwheels 22 is drivable by the other one of said first drive gearwheels 14.

The connecting rod 16 is rotatably connected to both of the drive gearwheels 14 of the pair of first drive gearwheels 22 at a respective eccentric position of the respective first drive gearwheels 14 so as to drive these first drive gearwheels 14, wherein said eccentric position is eccentric with regard to the rotation axis 24 of the first drive gearwheels 14.

In the embodiment shown in figure 1 one or two flywheels 26 are arranged on the output shaft 18. One or more flywheels 26 can be provided in any embodiment of the present invention. Flywheels 26 may be used for storing power or energy, respectively, in order to achieve or ensure continuation of the rotation, which is particularly of advantage in single-piston designs, or designs in which a plurality of single piston designs (first single piston units 28) is arranged in a row such these pistons lie in the same plane and have the same phase.

It must be noted that a plurality of first units 28 of the design shown in figure 1 may be provided in a row, wherein the first unit 28 includes the members shown in figure 1 without the flywheels 26 and the output shaft 18. This may be performed such that all first cylinders 12 are arranged to be in the same plane (parallel to the rotation axis of the drive gears). Said first units 28 may be configured such that they drive the same output shaft 18.

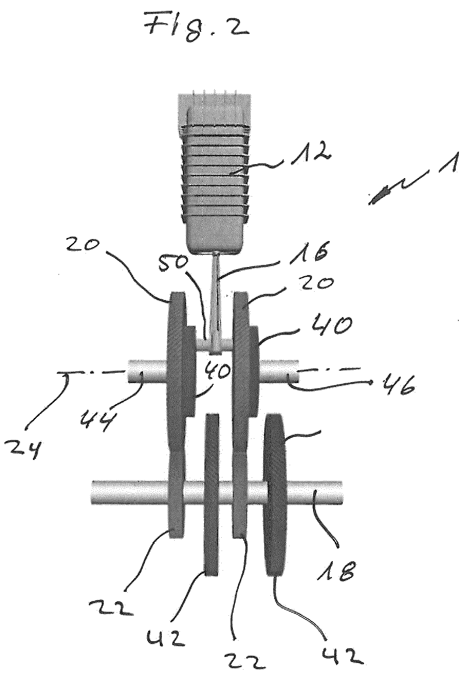

Fig. 2 shows an exemplary embodiment of the invention, in which a gear box is incorporated, which gear box enables to select different speed ratio between the drive and driven gearwheel or the shafts on by which these drive and driven gearwheels are supported respectively.

For the pair of first rotatable gearwheels 14, 22 a further pair of rotatable gearwheels (i.e. a further pair of drive gearwheels 40 and a further pair of driven gearwheels 42) is provided, and provides a further speed ratio, i.e. the relationship of the diameters of the drive and driven gear is different. The axis of rotation of the drive gearwheels 14 and further drive gearwheels 40 coincides. Besides, the axis of rotation of the driven gearwheels 22 and further driven gearwheels 42 coincides. It must be noted that the number of further pairs of drive and driven gearwheels may be selected depending on the number of desired gear ratio, and may count, for example two or three or four of five or six or seven or more than seven. In the embodiment shown in Fig. 2 all drive gearwheels 14, 40 are torque proof on the drive gearwheel support shaft 44 or 46, respectively, and all driven gearwheels are fixed to a sleeve (not shown) that is slidable on and torque proof with regard to the output shaft 18, so that the respective gear ration can be selected by axially moving the sleeve. However, other kind of coupling may be alternatively used so as to enable selection of gear ratio.

It must be noted that an according gear box or mechanism (as explained in connection with Fig. 2), respectively, can be provided in all embodiments of the invention. For example, such a gear box or mechanism may be also be provided with regard to second drive gearwheels and output shaft 18 and/or with regard to third drive gearwheels and output shaft 18. Besides, multiple gear boxes or mechanisms of said kind may be used, when multiple first units are provided in a row.

In Fig. 2, a (first) connecting shaft 50 is exemplarily shown

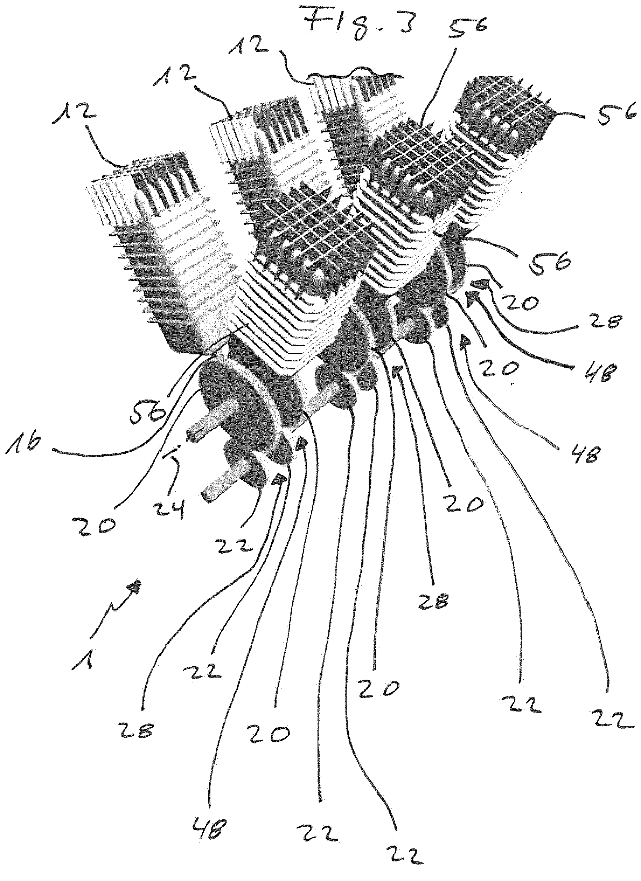

Fig. 3 shows another exemplary embodiment of the present invention. Fig. 3 shows a first option of designing a drive chain having an internal combustion that can be named internal combustion of the v-type.

Fig. 3 shows an exemplary embodiment of the invention, in which embodiment two cylinders, i.e. a first 12 and a second cylinder 56, are provided, with these cylinders being arranged in a plane perpendicular to the axis of rotation 24 of the drive gearwheels 14, with an angle (than is unequal to zero degrees) between the longitudinal axes of these cylinders 12, 56.

The internal combustion engine 10 comprises one or more second cylinders (in this case a plurality of second cylinders in a row each of them being part of a separate first unit 28, so that the following explanations refer to a single first unit 28).

Said second cylinder 56 receives a respective second piston slidably arranged within the respective second cylinder, with said second cylinder and said second piston defining a combustion chamber, and with said second piston being swivelably connected to a second connecting rod 48.

Said second connecting rod 48 is rotatably connected to both of the drive gearwheels 20 of the pair of first drive gearwheels 20 at a respective eccentric position of the respective first drive gearwheels 20 so as to drive these first drive gearwheels 20. Said eccentric position is eccentric with regard to the rotation axis 24 of the first drive gearwheels 20.

Apart from the afore-mentioned second cylinder, piston, and connecting rod, reference is made to the explanations referring to Fig. 1 with regard to the embodiment shown in Fig. 3.

The eccentric position at which the first connecting rod 16 linked to the first drive wheels 20 corresponds to the eccentric position at which the second connecting rod 48 is linked to the first drive wheels 20. A single connecting shaft 50 may be used so as to link the first and second connecting rods 16, 48 to the pair of first gearwheels 20.

In the embodiment shown in Fig. 3 the first and second cylinders 12, 56 (belonging to the same first unit 28) are provided for a single phase.

In Fig. 3 two cylinders 12, 56 in a single phase, a single pair of drive gearwheels 20, and a single pair of driven gearwheels 22 are provided per unit 28.

A plurality of units 28 is provided in a row and shares the same output shaft 18.

The row is configured such that the first cylinders 12 of the units 28 are in the same (first) plane, and the second cylinders 56 are in the same plane.

The units 28 may be in an equal phase or in different phases. For example, the there may exist three different phases.

The different phases may be such that the pistons of different cylinders arranged in the same plane have different positions at the same time. It must be noted that the number of first units 28 may be varied.

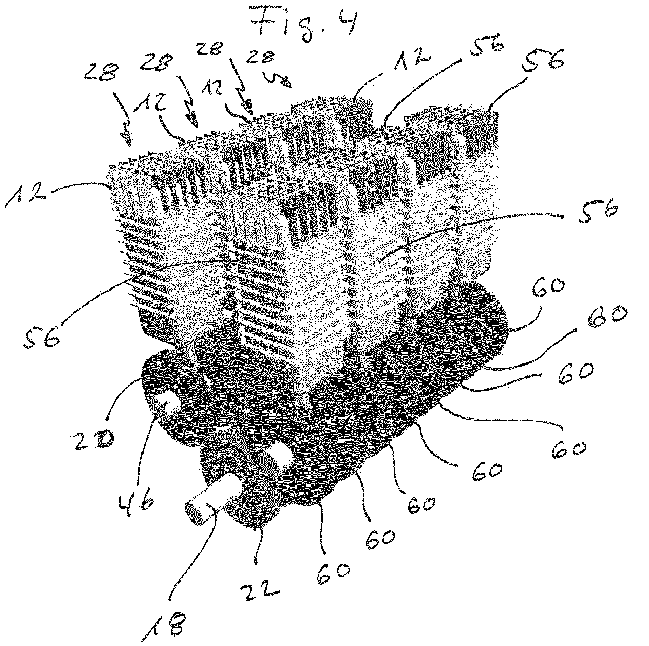

Fig. 4 shows another exemplary embodiment of the present invention. Fig. 4 shows a second option of designing a drive chain having an internal combustion that can be named internal combustion of the v-type.

The embodiment shown in Fig. 4 differs from the embodiment shown in Fig. 3 in that the drive chain 1 further comprises a pair of second rotatable drive gearwheels 60 arranged in parallel to each other, wherein a first one of said first driven gearwheels 22 is drivable by a first one of said second drive gearwheels 60 and the other one of the said first driven gearwheels 22 is drivable by the other one of said second drive gearwheels 60. Besides, the second connecting rod is rotatably connected to both of the drive gearwheels of the pair of second drive gearwheels 60 at a respective eccentric position of the respective second drive gearwheels 60 so as to drive these second drive gearwheels, with said eccentric position being eccentric with regard to the rotation axis of the second drive gearwheels.

The first and second cylinders of the same first unit 28 provide a single phase.

Besides, the number of units 28 is different from that one shown in Fig. 3, but may be varied in any way.

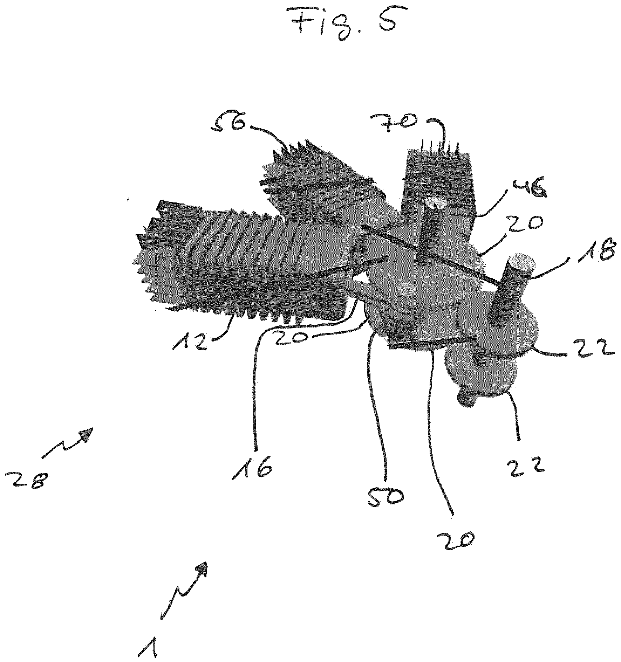

Fig. 5 shows a further exemplary embodiment of the present invention. Fig. 5 shows a first option of designing a drive chain having an internal combustion that can be named internal combustion of the w-type.

The embodiment of Fig. 5 differs from the embodiment of Fig. 3 substantially in that the internal combustion engine 10 further comprises one or more third cylinders 70 (one third cylinder is shown in Fig. 5), wherein each of said one or more third cylinders 70 receives a respective third piston (not shown) slidably arranged within the respective third cylinder 70, with said third cylinder 70 and said third piston defining a combustion chamber, and with said third piston being swivelably connected to a third connecting rod. The third connecting rod is rotatably connected to both of the drive gearwheels 20 of the pair of first drive gearwheels 20 at a respective eccentric position of the respective first drive gearwheels 20 so as to drive these first drive gearwheels 20, with said eccentric position being eccentric with regard to the rotation axis 24 of the first drive gearwheels 20. Said eccentric position corresponds to that one at which the first and second connecting rods are linked to the first drive wheels 14. The third connecting rod may be supported by the same connecting shaft as the first and second connecting rods. The number of first units may be varied. The first, second, and third pistons of the same first unit 28 form a single phase.

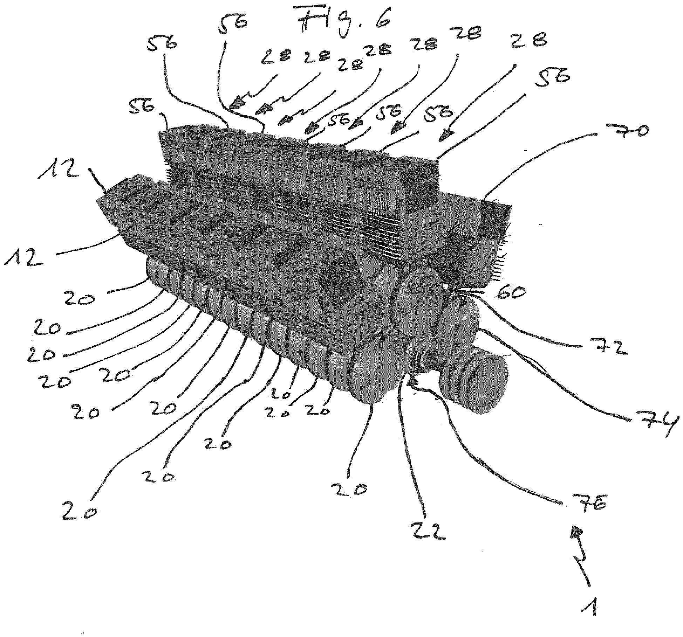

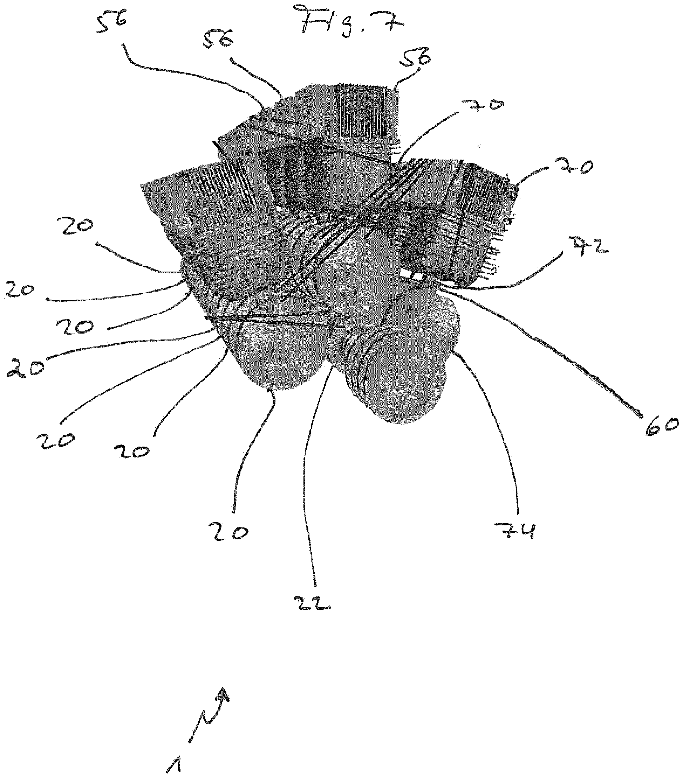

Figures 6 and 7 show another exemplary embodiment of the present invention. Figures 5 and 6 show a second option of designing a drive chain having an internal combustion that can be named internal combustion of the w-type.

The embodiment shown in Figures 6 and 7 differs from the embodiment shown in Fig. 4 substantially in that the internal combustion engine 10 further comprises one or more third cylinders 70 (one third cylinder per first unit 28), wherein each of said one or more third cylinders 70 receives a respective third piston (not shown) slidably arranged within the respective third cylinder 70, with said third cylinder 70 and said third piston defining a combustion chamber, and with said third piston being swivelably connected to a third connecting rod 72. In addition, a pair of third rotatable drive gearwheels 74 is arranged in parallel to each other. Besides, a first one of said first driven gearwheels 22 is drivable by a first one of said third drive gearwheels 74 and the other one of the said first driven gearwheels 22 is drivable by the other one of said third drive gearwheels. I.e. the pairs of first, second, and third drive gearwheels drive or engage, respectively, the pair of driven gearwheels. Moreover, the third connecting rod 72 is rotatably connected to both of the third drive gearwheels 74 of the pair of third drive gearwheels 74 at a respective eccentric position of the respective third drive gearwheels so as to drive these third drive gearwheels, with said eccentric position being eccentric with regard to the rotation axis of the third drive gearwheels.

The first 12, second 56, and third 70 cylinders of the same first unit 28 provide a single phase.

In the embodiment shown in Fig. 6, there is further shown a second switching device 76 that is configured to interrupt and close the torque flow from the cylinders of a first unit 28 to the output shaft 22. In this embodiment, said second switching device is exemplarily arranged on the output shaft, but may be positioned at another position. Such a second switching device 76 may be provided in any embodiment of the present invention. The second switching device 76 further may be designed such that any first units 28 running in the same phase can be switched on or off by interruption or closing of the respective torque flow. However, the second switching device 76 may even be designed such that any first unit 28 can be selected to be switched on or off, depending of the user's need. The second switching device may be configured such that the user can select the number of pistons loading the output shaft during engine performance to any number according to the user's need without turning the combustion engine off.

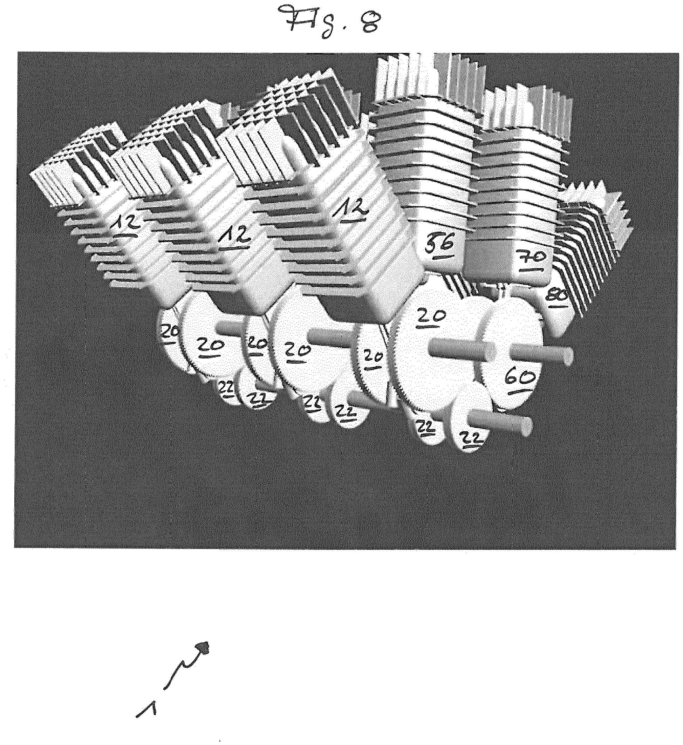

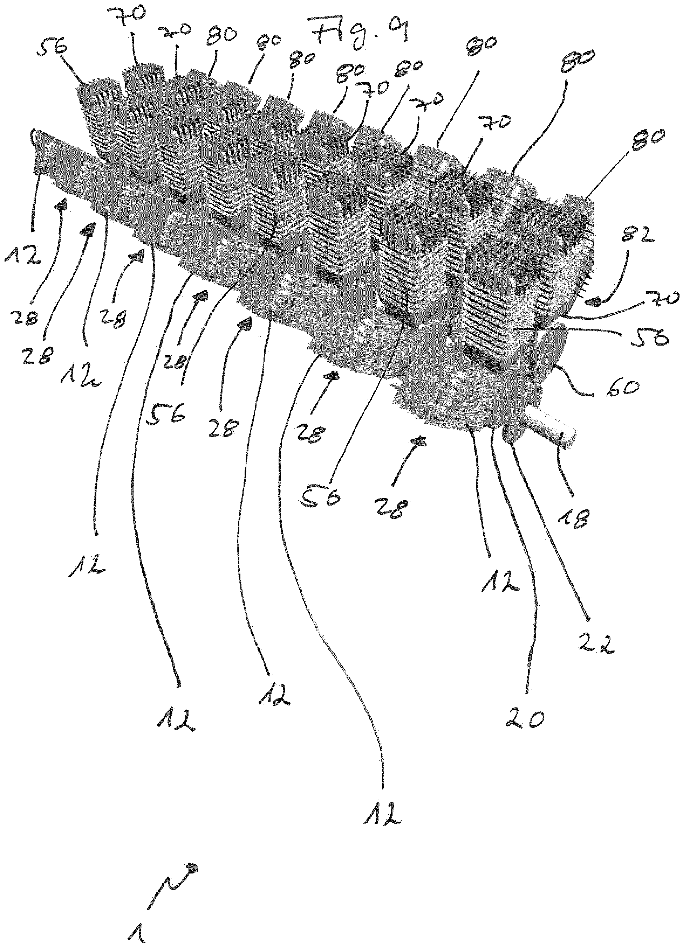

Figures 8 and 9 show another exemplary embodiment of the present invention. Figures 8 and 9 show an option of designing a drive chain having an internal combustion that can be named internal combustion of the vv-type.

The embodiment shown in Figure 8 and 9 is a combination of the embodiments shown in Figures 3 and 4.

Starting from the embodiment shown in Fig. 3, a pair of second drive gearwheels 60 is added so as to drive the pair of driven gearwheels 22, in accordance with the embodiment shown in Fig. 4. However, the pair of second drive gearwheels 60 is also drivable by two cylinder-piston-connecting rod assemblies in accordance with Fig. 3. For ease of reference the latter ones are named third cylinder 70, third piston, third connecting rod 72, fourth cylinder 80, fourth piston, and fourth connecting rod 82.

The first, second, third, and fourth cylinders run in the same phase within one first unit 28, and the phase may differ between different first units 28.

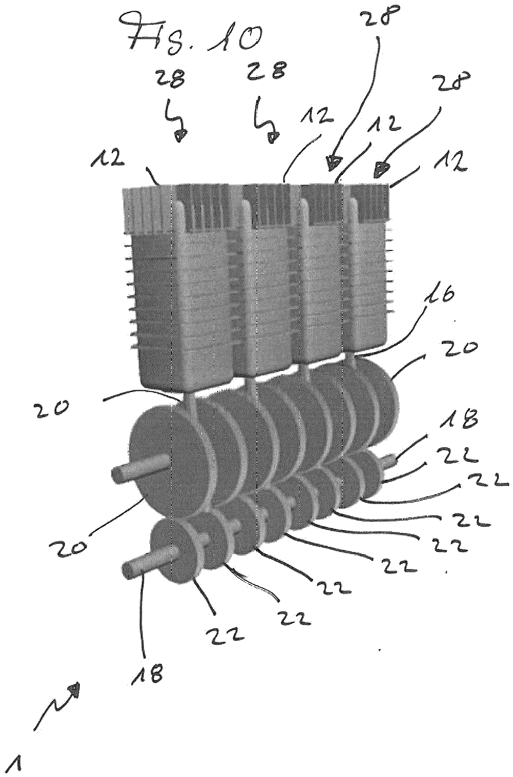

Fig. 10 shows a further exemplary embodiment of the present invention.

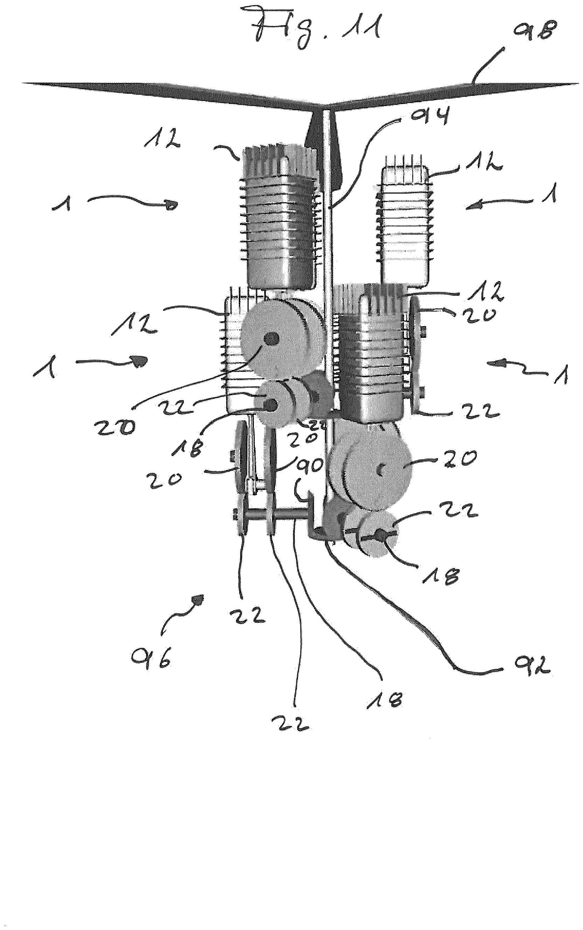

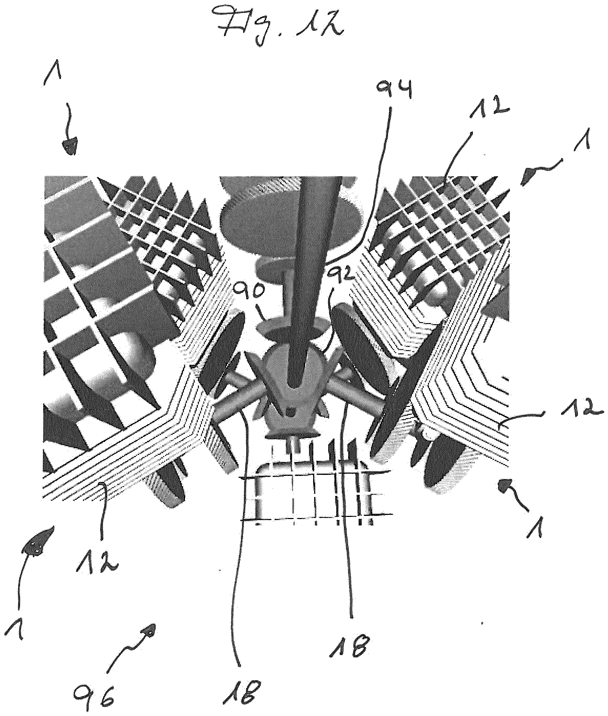

Figures 11 and 12 show a further exemplary embodiment of the present invention. Figures 11 and 12 show a possible application of exemplary drive chains 1 of the present invention in a helicopter application.

A plurality of drive chains according to the present invention, like for example four drive chains 1 (see Figs. 11 and 12), is provided and may be designed according to any exemplary embodiment of the invention. In Fig. 11 and 12 the four drive chains 1 are substantially in accordance with the design shown in Fig. 1, but any other design, like of those shown in Figures 2 to 10, may alternatively be used.

Each of the output shafts 18 is provided with bevel gear wheel 90 engaging a bevel gear wheel 92 fixed on a rotor shaft 94 of the helicopter 98 (partly shown), wherein said rotor shaft 94 is provided with a rotor 96.

For each bevel gear wheel 90 a separate bevel gear wheel 92 is provided on the rotor shaft 94.

Referring to all exemplary embodiments of the present invention, the respective swivelable connection between the respective piston and the respective connecting rod may be performed, for example, by means of a connecting shaft or bolt, respectively, and respective holes for receiving the bolt, or in any other suitable manner. For example, one single connecting shaft may be provided so as to link both of the drive gearwheels of the respective pair of drive gearwheels to the respective connecting rod.

Referring to all exemplary embodiments of the present invention, the respective drive gears directly engage the respective driven gearwheels. However, alternatively intermediate gears may be provided in the torque flow.

Referring to all exemplary embodiments of the present invention, the respective driven gearwheels may be solvably connected torque proof to the output shaft 18. For example, bearings, like ball bearings, may be provided between the respective driven gearwheels and the output shaft 18, wherein couplings may couple the respective driven gearwheels and the output shaft 18 in a torque proof manner. Alternatively, the respective driven gearwheels may be fixedly arranged on a sleeve or sleeves, that is/are torque proof slidable on the output shaft 18. The afore-mentioned examples are particularly advantageouin such exemplary embodiments in which different driven gearwheels may have different rotational speeds at the same time or different gears may be engaged, respectively (see Fig. 2, for example, wherein the principle shown therein may be applied to all exemplary embodiments of the invention in a corresponding manner).

Referring to all exemplary embodiments of the present invention, the axes of rotation of the two respective drive gearwheels of a respective pair of drive gearwheels may coincide. The same applies to the axes of rotation of the two respective driven gearwheels. Besides, the eccentric positions (with regard to the axis of rotation of the respective drive wheels) of the two drive wheels of the respective pair of drive wheels, at which eccentric position the rotational axis of the respective connecting rod and the respective drive wheels of the respective pair of drive wheels is located may be identical for both of these drive wheels, which refer to all exemplary embodiments of the invention.

Referring to all exemplary embodiments of the present invention, a housing 58 may be provided for supporting the ball bearings and/or driven shaft and/or the drive gearwheel support shafts 44, 46. In addition, sleeves 30 having a shoulder may be provided and fixed to the housing 58, for example by screws. Such sleeves 30 may serve to support the drive gearwheel support shafts 44, 46.

Referring to all exemplary embodiments of the present invention, the cylinders of the same first unit 28 may provide a single phase. Phase variation may be provided by providing a plurality of first units 28, the first cylinders of which run in a different phase and/or the second cylinders of which run in a different phase and/or the third cylinders of which run in a different phase and/or the fourth cylinders of which run in a different phase.

The (combustion) engine may be designed as a row of individual cylinders longitudinally to form a combustion engine that consists of or comprises a single row of individual cylinders (Fig. 1).

In the following some advantages are described that may be given, at least, in some embodiments of the present invention.

Some embodiments of the present invention give the designer sufficient flexibility in the design in order to obtain the desired speed by changing diameters of the drive and driven gears of this system.

Some embodiments of the present invention give the designer the ability to design a long stroke (combustion) engine to acquire a high capacity with an increase in rotation speed through the difference of diameters of drive and driven gears. The stroke length is connected with an increase of drive piston diameter, that is, the increase in stroke length is demonstrated as an increase in diameter of the drive piston gears.

Some embodiments of the present invention give the designer the ability to add pistons required to meet needs of the user. The fact that the main shaft is straight by increasing stiffness and load power of this shaft and make it stronger than device axis or load to be loaded on the (combustion) engine.

The user may connect several (combustion) engines sequentially to form a power outcome of a (combustion) engine to meet the user requirement.

Some embodiments of the present invention give the designer the ability to design a (combustion) engine by allowing the user to select the number of pistons operated and separate the other pistons to stop the motion.

The weight of the drive chain or (combustion) the engine can be low and the size may be smaller compared to the same engines or drive chains currently used.

Some embodiments of the present invention allow improving the fuel economy.

The present invention enables designing multi-phases engine in a simple manner. Each phase may consist, for example, of VV- shape (VV-type) four cylinders, or any other cylinder arrangement.

Some embodiments of the present invention give the designer the very high flexibility in the selection of engine-speed rate by controlling the diameters of the drive and driven gears. The stroke length can benefit from the increase in diameter of drive gears unlike the conventional engines. The designer can obtain high speed without increasing stroke length by changing the connection location of piston rods with drive gears.

Some embodiments of the present invention enable designing a dual-speed engine which can convert the reciprocating motion of the piston into the rotational motion with double speed or more by designing several drive geared gears with different diameters and corresponding driven gears according the designer's need.

Some embodiments of the present invention enable the designer to design an engine or drive chain, respectively, consisting of different multi-stroke, and running on different kinds of fuel. For example, in one engine in the first phase of these phases it operates with long stroke, i.e. oscillating motion for piston is slow through designing drive piston gears with long diameter compared to diameters of driven main shaft gears. The second phase may be designed with moderate speed by making the diameters of the drive piston gears equal to driven main shaft gears. The third phase may be slower through making the diameters of the drive piston for gears smaller than driven main shaft gears, at the same time another phase can be linked operated by benzene fuel, and a phase run with diesel with combustion engine shaft via drive and driven gears. This can be achieved by geometry in order to obtain homogeneous capacity and speed.

As far it is mentioned in the present application that a drive gearwheel drives a driven gearwheel, this may particularly such that the respective drive gearwheels and the respective driven gearwheels engage each other, or may be switch to a condition in which they engage each other.

### Gear Engine

New mechanical system converts the reciprocating motion of the piston into rotary motion.

The piston is connected with two of driver gears via connecting rod, and these driver gears (see figure 1 no 20) are providing the turning action through change the up-and-down motion into a turning motion.

The driver gears are in mesh with two other gears, which called driven gears (see figure 1 no 22). The meshing gears transmitting rotational motion.

The driven gears are attached with main power shaft engine and by the way the main power shaft will rotate with the driven gears (see figure 1).

The sample of this new invention, gear engine, is already made in my workshop in Iraq mosul-shora city on December 25, 2010.

**Reference numerals**
- 1: drive chain
- 10: internal combustion engine
- 12: first cylinder
- 14: first piston in 12
- 16: first connecting rod
- 18: output shaft
- 20: first rotatable drive gearwheel
- 22: first rotatable driven gearwheel
- 24: rotation axis of 14
- 26: flywheel
- 28: first unit
- 30: sleeve
- 32: shoulder
- 40: further drive gearwheel
- 42: further driven gearwheel
- 44: drive gearwheel support shaft
- 46: drive gearwheel support shaft
- 48: second connecting rod
- 50: (first) connecting shaft
- 56: second cylinder
- 58: housing
- 60: second rotatable drive gearwheel
- 70: third cylinder
- 72: third connecting rod
- 74: third rotatable drive gearwheel
- 76: second switching device
- 80: fourth cylinder
- 82: fourth connecting rod
- 90: bevel gear wheel of 18
- 92: bevel gear wheel of 94
- 94: rotor shaft
- 96: helicopter
- 98: rotor

## Claims

1. New mechanical system converts the reciprocating motion of the piston into rotary motion.
The piston is connected with two of driver gears (figure 1 no. 20) via connecting rod, and these driver gears are providing the turning action through change the up-and-down motion into a rotary motion.
The driver gears are in mesh with two other gears, which called driven gears (Figure 1 no. 22). The meshing gears transmitting rotational motion.
The driven gears are attached with main power shaft engine (figure 1 no. 18) and of course the main power shaft will rotate with the driven gears.

2. The designer is free to add the unspecified pistons as desire because the main shaft is straight (figure 1 no. 18); it has a superior load and unable to twirl.

3. Engine can be designed as inline engines and all cylinders mounted in a straight line, (see figure 10).

4. The gear engine can be produced as two types of V-shape engine, first one includes many stages, and each one of these stages works with one driver gear (figure 3).
The second type includes many stages, and each one of these stages works with two of driver gears (figure 4) .

5. The gear engine can be produced as two types of W-shape engine, first one includes many stages, and each one of these stages works with one driver gear (figure 5). The second type includes many stages, and each one of these stages works with three of driver gears (figure 6).

6. The gear engine can be produced as one type of V-V-shape engine, which includes many stages, and each one of these stages includes four cylinders, and each couple of cylinders attached with one driver gear, so that the each stage includes two driver gears (figure 9).

7. Grant the designer a full control without any limitations to get different ratio of speed.

8. The designer able to design dual-speed engine which can convert the reciprocating motion of the piston into the rotational motion with double speed or more by designing several drive geared gears with different diameters corresponding driven gears according the designer's need. Figure 2 is a design model with a high speed and another design with low speed; we could note herein that the technology is flexible to meet the designer's need in multiplicity options.

9. The new engine will be ideal for rotorcraft (see the figure no 11). We can produce rotorcraft engine. The differential transmits torque and rotation through spiral bevel gear among main engines power shafts. And this spiral bevel gear is attached with the main shaft of rotorcraft.
